(19) **Europäisches Patentamt**
**European Patent Office**
**Office européen des brevets**

(11) **EP 1 537 159 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**13.04.2011 Patentblatt 2011/15**

(45) Hinweis auf die Patenterteilung:
**12.09.2007 Patentblatt 2007/37**

(21) Anmeldenummer: **03790810.0**

(22) Anmeldetag: **24.07.2003**

(51) Int Cl.:
*C08G 18/48* (2006.01)   *C08G 18/08* (2006.01)

(86) Internationale Anmeldenummer:
**PCT/EP2003/008090**

(87) Internationale Veröffentlichungsnummer:
**WO 2004/020497 (11.03.2004 Gazette 2004/11)**

(54) **VERFAHREN ZUR HERSTELLUNG VON EMISSIONSARMEN POLYURETHAN-WEICHSCHAUMSTOFFEN**

METHOD FOR THE PRODUCTION OF LOW-EMISSION POLYURETHANE SOFT FOAMS

PROCEDE DE PREPARATION DE MATERIAUX EXPANSES SOUPLES POLYURETHANE A EMISSIONS FAIBLES

(84) Benannte Vertragsstaaten:
**AT BE BG CH CY CZ DE DK EE ES FI FR GB GR HU IE IT LI LU MC NL PT RO SE SI SK TR**

(30) Priorität: **28.08.2002 DE 10240186**

(43) Veröffentlichungstag der Anmeldung:
**08.06.2005 Patentblatt 2005/23**

(73) Patentinhaber: **BASF SE**
**67056 Ludwigshafen (DE)**

(72) Erfinder:
- **BAUER, Stephan**
  **49179 Ostercappeln (DE)**
- **RUPPEL, Raimund**
  **01127 Dresden (DE)**
- **BAUM, Eva**
  **01987 Schwarzheide (DE)**
- **WINKLER, Jürgen**
  **01987 Schwarzheide (DE)**

- **BOHRES, Edward**
  **68161 Mannheim (DE)**

(56) Entgegenhaltungen:
| | |
|---|---|
| EP-A- 0 130 458 | EP-A- 0 759 450 |
| EP-A- 0 759 450 | EP-A- 1 022 300 |
| WO-A-00/44813 | WO-A-01/27185 |
| WO-A-02/22702 | WO-A-02/22702 |
| DE-A- 19 840 846 | DE-A- 19 840 846 |
| DE-A- 19 936 481 | JP-A- 05 163 342 |
| US-A- 4 383 050 | US-A- 5 652 279 |
| US-A- 5 712 320 | US-A- 6 313 060 |
| US-A- 6 441 247 | |

- 'The ICI Polyurethanes book', 1990, ICI POLYURETHANES, CHICHESTER Seite 36-39

Bemerkungen:
Die Akte enthält technische Angaben, die nach dem Eingang der Anmeldung eingereicht wurden und die nicht in dieser Patentschrift enthalten sind.

**Beschreibung**

Gegenstand der Erfindung ist ein Verfahren zur Herstellung von Polyurethan-Blockweichschaumstoffe unter Verwendung von Polyetheralkoholen auf Basis von Rizinusöl.

Polyurethan-Weichschaumstoffe werden in vielen technischen Gebieten, insbesondere zur Polsterung oder Geräuschdämmung, eingesetzt. Ihre Herstellung erfolgt üblicherweise durch Umsetzung von Polyisocyanaten mit Verbindungen mit mindestens zwei mit Isocyanatgruppen reaktiven Wasserstoffatomen in Gegenwart von Treibmitteln sowie gegebenenfalls Katalysatoren und üblichen Hilfs- und/oder Zusatzstoffen.

Der Markt verlangt aus ökologischen Gründen zunehmend nach Schaumstoffen, auf Basis von nachwachsenden Rohstoffen. Derartige Schaumstoffe werden zumeist hergestellt durch Verwendung von Polyetherolen, die hergestellt werden durch Anlagerung von Alkylenoxiden an Verbindungen aus nachwachsenden Rohstoffen.

Beispiele für Verbindungen aus nachwachsenden Rohstoffen sind Rizinusöl, Polyhydroxyfettsäure, Rizinolsäure, mit Hydroxylgruppen modifizierte Öle wie Traubenkernöl, Schwarzkümmelöl, Kürbiskernöl, Borretschsamenöl, Sojaöl, Weizenkeimöl, Rapsöl, Sonnenblumenöl, Erdnussöl, Aprikosenkernöl, Pistazienkernöl, Mandelöl, Olivenöl, Macadamianussöl, Avocadoöl, Sanddornöl, Sesamöl, Hanföl, Haselnussöl, Nachtkerzenöl, Wildrosenöl, Hanföl, Distelöl, Walnussöl, mit Hydroxylgruppen modifizierte Fettsäuren und Fettsäureester auf Basis von Myristoleinsäure, Palmitoleinsäure, Ölsäure, Vaccensäure, Petroselinsäure, Gadoleinsäure, Erucasäure, Nervonsäure, Linolsäure, $\alpha$- und $\gamma$-Linolensäure, Stearidonsäure, Arachidonsäure, Timnodonsäure, Clupanodonsäure, Cervonsäure. Die größte technische Bedeutung hat hierbei das Rizinusöl.

Die Umsetzung der Verbindungen aus nachwachsenden Rohstoffen mit den Alkylenoxiden kann auf übliche und bekannte Art erfolgen. Zumeist wird die Ausgangsverbindung mit einem Katalysator vermischt und diese Mischung mit Alkylenoxiden umgesetzt. Die Anlagerung der Alkylenoxide erfolgt zumeist bei den üblichen Bedingungen, bei Temperaturen im Bereich von 60 bis 180°C, bevorzugt zwischen 90 bis 140°C, insbesondere zwischen 100 bis 130°C und Drücken im Bereich von 0 bis 20 bar, bevorzugt im Bereich von 0 bis 10 bar und insbesondere im Bereich von 0 bis 5 bar. Als Alkylenoxide werden vorzugsweise Ethylenoxid, Propylenoxid oder beliebige Mischungen dieser Verbindungen eingesetzt.

Als Katalysatoren werden vorzugsweise basische Verbindungen eingesetzt, wobei das Kaliumhydroxid die größte technische Bedeutung hat.

Aus WO 00/44813 ist es bekannt, Multimetallcyanidverbindungen, häufig auch als DMC-Katalysatoren bezeichnet, zur Alkoxylierung von Rizinusöl einzusetzen.

Die Polyetherole für Anwendungen in Weichschaumstoffen haben bevorzugt eine Hydroxyzahl von 20 bis 100 mg/KOH bei einer Viskosität im Bereich von 400 bis 6000 mPa·s.

Polyurethan-Weichschaumstoffe, hergestellt aus Polyetheralkoholen, die auf Basis von nachwachsenden Rohstoffen wie Rizinusöl unter Verwendung basischer Katalysatoren hergestellt werden, zeigen bezüglich Geruch, Emissionen und Fogging sehr schlechte Eigenschaften.

So entstehen bei der Herstellung von Rizinusöl-Polyetherolen deutliche Mengen an dem Zyklus der Rizinolsäure ((R)-(Z)-12-Hydroxy-9-octadecensäure).

Dieser Zyklus kann durch einfaches Dampfstrippen nur teilweise entfernt werden. Daher weisen die Polyetheralkohole sowie die daraus hergestellten Schäume Emissionen, Geruch und Fogging auf. Ein Einsatz dieser Polyetherole für die Herstellung von Möbel- und Matratzenweichschaum und oder Weichschaum für die Automobilanwendungen wird von dem Markt daher nicht akzeptiert. Als eine etablierte Prüfmethode im Markt hat sich die DaimlerChrysler Prüfanweisung PB VWL 709: "Analyse der flüchtigen Emissionen flüchtiger und kondensierbarer Substanzen aus Fahrzeuginnenraum Materialien mittels Thermodesorption" durchgesetzt.

Der Wert für die Emissionen flüchtiger Verbindungen werden im folgenden als VOC-Wert (VOC-Wert = Volatile Organic Compounds) bezeichnet. Der Wert für die Emissionen kondensierbarer Verbindungen werden im folgenden als FOG-Wert bezeichnet. In der Prüfanweisung ist für Weichschaumstoffe ein VOC-Wert von 100 ppm und als FOG-Wert ein Zielwert von 250 ppm genannt. Diese von der Automobilindustrie gestellten Anforderungen werden auch zunehmend von schaumstoffverarbeitenden Industrie und Schaumherstellern gefordert. Polyetherole, auf Basis von nachwaschenden Rohstoffen, insbesondere Rizinusöl, hergestellt mittels basischer Katalyse, wie mittels Kaliumhydroxid-Katalyse, zeigen in der Thermodesorption einen VOC-und FOG-Wert, der über den genannten Zielwerten liegt. Die zyklischen Fettsäureester tragen dabei wesentlich zu den hohen VOC und FOG-Werten bei.

Nachteilig ist weiterhin, dass Polyurethan-Weichschaumstoffe, die aus Polyetheralkohole nachwachsenden Rohstoffen hergestellt werden, häufig Risse oder nur eine zu geringe Offenzelligkeit aufweisen. Die Möglichkeit, Rezepturänderungen vorzunehmen, häufig als Verarbeitungsbreite bezeichnet, ist bei der Verwendung derartiger Verbindungen eingeschränkt.

Nachteilig ist weiterhin, dass Polyurethan-Weichschaumstoffe, die aus Polyetheralkohole nachwachsenden Rohstoffen hergestellt werden, einen schlechten Druckverformungsrest zeigen. Bei Blockweichschaumstoffen liegt beispielsweise der Druckverformungsrest, bestimmt nach DIN EN 3386 über 7 % und nach der Alterung, gemäß DIN EN

Überraschenderweise wurde gefunden, dass bei Polyetheralkoholen, die durch Anlagerung von Alkylenoxiden an Verbindungen aus nachwachsenden Rohstoffen unter Verwendung von DMC-Katalysatoren hergestellt wurden, die genannten Nachteile nicht auftraten. Dabei war nicht nötig, die Polyetheralkohole nach ihrer Herstellung einem Strippen mit Dampf zu unterziehen.

Gegenstand der vorliegenden Erfindung ist somit ein Verfahren zur Herstellung von emissionsarmen Polyurethan-Blockweichschaumstoffen mit verringertem Geruch und verringertem Fogging mit einem Druckverformungsrest von maximal nach Alterung, gemäß DIN EN ISO 2440, maximal 10% durch Umsetzung von

    a) Polyisocyanaten mit

    b) Verbindungen mit mindestens zwei mit Isocyanatgruppen reaktiven Wasserstoffatomen,

    c) Treibmitteln

dadurch gekennzeichnet, dass als Verbindungen mit mindestens zwei mit Isocyanatgruppen reaktiven Wasserstoffatomen b) Polyetheralkohole, die durch Anlagerung von Alkylenoxiden an Rizinusöl, unter Verwendung von DMC-Katalysatoren hergestellt wurden, eingesetzt werden.

Gegenstand der Erfindung sind auch die nach dem erfindungsgemäßen Verfahren hergestellten emissionsarmen Blockweichschaumstoffen. Diese weisen vorzugsweise einen maximalen VOC-Wert von 100, bevorzugt von 50 und ganz bevorzugt von unter 20 ppm, und einen maximalen FOG-Wert von 200, bevorzugt von 100 und ganz bevorzugt unter 50 ppm aufweist, jeweils verursacht durch die Bestandteile des erfindungsgemäß verwendeten Polyols im Polyurethan auf. Die genannten Werte werden nach der DaimlerChrysler Prüfanweisung PB VWL 709: "Analyse der flüchtigen Emissionen flüchtiger und kondensierbarer Substanzen aus Fahrzeuginnenraum Materialien mittels Thermodesorption" bestimmt. Weiterhin weisen die nach dem erfindungsgemäßen Verfahren hergestellten Blockweichschaumstoffen maximale Geruchswert des erfindungsgemäßen Polyetherols kleiner gleich 2,0, bevorzugt kleiner gleich 1,7 auf. Die Prüfvorschrift für den Geruchswert ist weiter unten angegeben.

Gegenstand der Erfindung ist weiterhin die Verwendung von Polyurethan-Blockweichschaumstoffen nach Anspruch 2 für den Einsatz in Kraftfahrzeuginnenräumen.

Gegenstand der Erfindung ist weiterhin die Verwendung von Polyurethan-Blockweichschaumstoffen nach Anspruch 2 für den Einsatz zur Herstellung von Möbeln und Matratzen.

Vorzugsweise weisen die erfindungsgemäß verwendeten Polyetheralkohole, die durch Anlagerung von Alkylenoxiden an Verbindungen aus Rizinusöl unter Verwendung von DMC-Katalysatoren hergestellt wurden, ein mittleres Molekulargewicht im Bereich zwischen 400 bis 20000 mgOH/g, bevorzugt 1000 bis 8000 g/mol, auf.

Vorzugsweise wiesen die Produkte aus der Anlagerung von Alkylenoxiden an Rizinusöl unter Verwendung von DMC-Katalysatoren einen Gehalt an zyklischen Fettsäureestern von maximal 50 ppm, vorzugsweise maximal 10 ppm, auf.

Die erfindungsgemäße Herstellung von Polyetheralkoholen erfolgt, wie ausgeführt, indem man Alkylenoxide unter Verwendung von DMC-Katalysatoren an H-funktionellen Startsubstanzen anlagert.

Die DMC-Katalysatoren sind allgemein bekannt und beispielsweise in EP 654 302, EP 862 947, WO 99/16775, WO 00/74845, WO 00/74843 und WO 00/74844 beschrieben.

Als Alkylenoxide können alle bekannten Alkylenoxide verwendet werden, beispielsweise Ethylenoxid, Propylenoxid, Butylenoxid, Styroloxid. Insbesondere werden als Alkylenoxide Ethylenoxid, Propylenoxid und Mischungen aus den genannten Verbindungen eingesetzt.

Die Anlagerung der Alkylenoxide bei der Herstellung der für das erfindungsgemäße Verfahren eingesetzten Polyetheralkohole kann nach den bekannten Verfahren erfolgen. So ist es möglich, dass zur Herstellung der Polyetheralkohole nur ein Alkylenoxid eingesetzt wird. Bei Verwendung von mehreren Alkylenoxiden ist eine sogenannte blockweise Anlagerung, bei der die Alkylenoxide einzeln nacheinander angelagert werden, oder eine sogenannte statistische Anlagerung, bei der die Alkylenoxide gemeinsam zudosiert werden, möglich. Es ist auch möglich, bei der Herstellung der Polyetheralkohole sowohl blockweise als auch statistische Abschnitte in die Polyetherkette einzubauen.

Vorzugsweise werden zur Herstellung von Polyurethan-Blockweichschaumstoffen Polyetheralkohole mit einem hohen Gehalt an sekundären Hydroxylgruppen und einem Gehalt an Ethylenoxideinheiten in der Polyetherkette von maximal 30 Gew.-%, bezogen auf das Gewicht des Polyetheralkohols, verwendet. Vorzugsweise haben diese Polyetheralkohole am Kettenende einen Propylenoxidblock.

In einer besonderen Ausführungsform der Anlagerung von Mischungen aus mindestens zwei Alkylenoxiden kann das Verhältnis der Alkylenoxide zueinander während der Anlagerung verändert werden, wie in DE 199 60 148 A1 beschrieben.

Die Anlagerung der Alkylenoxide erfolgt bei den üblichen Bedingungen, bei Temperaturen im Bereich von 60 bis 180°C, bevorzugt zwischen 90 bis 140°C, insbesondere zwischen 100 bis 130°C und Drücken im Bereich von 0 bis 20 bar, bevorzugt im Bereich von 0 bis 10 bar und insbesondere im Bereich von 0 bis 5 bar. Die Mischung aus Startsubstanz und DMC-Katalysator kann vor Beginn der Alkoxylierung gemäß der Lehre von WO 98/52689 durch Strippen vorbehandelt werden.

In einer weiteren Ausführungsform, beispielsweise beschrieben in DD 203734/735, wird neben den Alkylenoxiden während der Synthese einer oder mehrere weitere Starteralkohole zudosiert, die mit dem vorgelegten identisch oder von diesem verschieden sein können.

Nach Beendigung der Anlagerung der Alkylenoxide wird der Polyetheralkohol nach üblichen Verfahren aufgearbeitet, indem die nicht umgesetzten Alkylenoxide sowie leicht flüchtige Bestandteile entfernt werden, üblicherweise durch Destillation, Wasserdampf- oder Gasstrippen und oder anderen Methoden der Desodorierung. Falls erforderlich, kann auch eine Filtration erfolgen.

Die Herstellung der erfindungsgemäßen Polyurethan-Blockweichschaumstoffe kann ebenfalls nach üblichen und bekannten Verfahren erfolgen.

Zu den für das erfindungsgemäße Verfahren eingesetzten Ausgangsverbindungen ist im einzelnen folgendes zu sagen:

Als Polyisocyanate a) können für das erfindungsgemäße Verfahren alle Isocyanate mit zwei oder mehr Isocyanatgruppen im Molekül zum Einsatz kommen. Dabei können sowohl aliphatische Isocyanate, wie Hexamethylendiisocyanat (HDI) oder Isophorondiisocyanat (IPDI), oder vorzugsweise aromatische Isocyanate, wie Toluylendiisocyanat (TDI), Diphenylmethandiisocyanat (MDI) oder Mischungen aus Diphenylmethandiisocyanat und Polymethylenpolyphenylenpolyisocyanaten (Roh-MDI), vorzugsweise TDI und MDI, besonders bevorzugt TDI, verwendet werden. Es ist auch möglich, Isocyanate einzusetzen, die durch den Einbau von Urethan-, Uretdion-, Isocyanurat-, Allophanat-, Uretoniminund anderen Gruppen modifiziert wurden, sogenannte modifizierte Isocyanate. Bevorzugte Prepolymere sind MDI-Prepolymere mit einem NCO-Gehalt zwischen 20 und 35 % bzw. deren Mischungen mit Polymethylenpolyphenylenpolyisocyanaten (Roh-MDI).

Die erfindungsgemäß eingesetzten Polyetheralkohole b), die durch Anlagerung von Alkylenoxiden an Rizinusöl unter Verwendung von DMC-Katalysatoren hergestellt werden, können allein oder in Kombination mit anderen Verbindungen mit mindestens zwei mit Isocyanatgruppen eingesetzt werden.

Als Verbindung mit mindestens zwei aktiven Wasserstoffatomen b), die zusammen mit den erfindungsgemäß eingesetzten Polyetheralkoholen eingesetzt werden können, kommen insbesondere Polyesteralkohole und vorzugsweise Polyetheralkohole mit einer Funktionalität von 2 bis 16, insbesondere von 2 bis 8, vorzugsweise von 2 bis 4 und einem mittleren Molekulargewicht $M_w$ im Bereich von 400 bis 20000 g/mol, vorzugsweise 1000 bis 8000 g/mol, in Betracht.

Die Polyetheralkohole, die gegebenenfalls zusammen mit den erfindungsgemäß eingesetzten Polyetheralkoholen eingesetzt werden, können nach bekannten Verfahren, zumeist durch katalytische Anlagerung von Alkylenoxiden, insbesondere Ethylenoxid und/oder Propylenoxid, an H-funktionelle Startsubstanzen, oder durch Kondensation von Tetrahydrofuran, hergestellt werden. Als H-funktionelle Startsubstanzen kommen insbesondere mehrfunktionelle Alkohole und/oder Amine zum Einsatz. Bevorzugt eingesetzt werden Wasser, zweiwertige Alkohole, beispielsweise Ethylenglykol, Propylenglykol, oder Butandiole, dreiwertige Alkohole, beispielsweise Glycerin oder Trimethylolpropan, sowie höherwertige Alkohole, wie Pentaerythrit, Zuckeralkohole, beispielsweise Sucrose, Glucose oder Sorbit. Bevorzugt eingesetzte Amine sind aliphatische Amine mit bis zu 10 Kohlenstoffatomen, beispielsweise Ethylendiamin, Diethylentriamin, Propylendiamin, sowie Aminoalkohole, wie Ethanolamin oder Diethanolamin. Als Alkylenoxide werden vorzugsweise Ethylenoxid und/oder Propylenoxid eingesetzt, wobei bei Polyetheralkoholen, die für die Herstellung von Polyurethan-Weichschäumen verwendet werden, häufig am Kettenende ein Ethylenoxidblock angelagert wird. Als Katalysatoren bei der Anlagerung der Alkylenoxide kommen insbesondere basische Verbindungen zum Einsatz, wobei hier das Kaliumhydroxid die größte technische Bedeutung hat. Wenn der Gehalt an ungesättigten Bestandteilen in den Polyetheralkoholen gering sein soll, können als Katalysatoren zur Herstellung dieser Polyetheralkohole auch DMC-Katalysatoren zum Einsatz kommen.

Für bestimmte Einsatzgebiete, insbesondere zur Erhöhung der Härte der Polyurethan-Blockweichschaumstoffe, können auch sogenannte polymermodifizierte Polyole mitverwendet werden. Derartige Polyole können beispielsweise durch in-situ Polymerisation von ethylenisch ungesättigten Monomeren, vorzugsweise Styrol und/oder Acrylnitril, in Polyetheralkoholen hergestellt werden. Zu den polymermodifizierten Polyetheralkoholen gehören auch Polyharnstoffdispersionen enthaltende Polyetheralkohole, die vorzugsweise durch Umsetzung von Aminen mit Isocyanaten in Polyolen hergestellt werden.

Bevorzugt werden zur Herstellung von Blockweichschaumstoffen nach dem erfindungsgemäßen Verfahren zwei- und/oder dreifunktionelle Polyetheralkohole eingesetzt, die sekundäre Hydroxylgruppen, bevorzugt über 90 %, aufweisen, insbesondere solche mit einem Propylenoxidblock oder statischen Propylen- und Ethylenoxidblock am Kettenende oder solche, die nur auf Propylenoxidblock basieren.

Zu den Verbindungen mit mindestens zwei aktiven Wasserstoffatomen b) gehören auch die Kettenverlängerungs- und Vernetzungsmittel. Als Kettenverlängerungs- und Vernetzungsmittel werden vorzugsweise 2- und 3-funktionelle Alkohole mit Molekulargewichten von 62 bis 800 g/mol, insbesondere im Bereich von 60 bis 200 g/mol, verwendet.

Beispiele sind Ethylenglykol, Propylenglykol, Diethylenglykol, Triethylenglykol, Dipropylenglykol, Tripropylenglykol, niedermolekulare Polypropylen- und Polyethylenoxide, wie Lupranol® 1200, Butandiol-1,4, Glycerin oder Trimethylolpropan. Als Vernetzungsmittel können auch Diamine, Sorbit, Glycerin, Alkanolamine eingesetzt werden. Falls Kettenverlängerungs- und Vernetzungsmittel eingesetzt werden, beträgt deren Menge vorzugsweise bis zu 5 Gew.-%, bezogen auf das Gewicht der Verbindungen mit mindestens zwei aktiven Wasserstoffatomen.

Das erfindungsgemäße Verfahren erfolgt zumeist in Anwesenheit von Aktivatoren, beispielsweise tertiären Aminen oder organischen Metallverbindungen, insbesondere Zinnverbindungen. Als Zinnverbindungen werden bevorzugt zweiwertige Zinnsalze von Fettsäuren wie Zinndioktoat und zinnorganische Verbindungen wie Dibutylzinndilaurat verwendet.

Als Treibmittel c) zur Herstellung der Polyurethan-Blockweichschaumstoffe wird bevorzugt Wasser eingesetzt, das mit den Isocyanatgruppen unter Freisetzung von Kohlendioxid reagiert. Bevorzugt wird Wasser in einer Menge von 0,5 bis 6 Gew.-%, insbesondere bevorzugt in einer Menge von 1,5 bis 5,0 Gew.-% verwendet. Gemeinsam mit oder an Stelle von Wasser können auch physikalisch wirkende Treibmittel, beispielsweise Kohlendioxid, Kohlenwasserstoffe, wie n-, iso- oder Cyclopentan, Cyclohexan oder halogenierte Kohlenwasserstoffe, wie Tetrafluorethan, Pentafluorpropan, Heptafluorpropan, Pentafluorbutan, Hexafluorbutan oder Dichlormonofluorethan, eingesetzt werden. Die Menge des physikalischen Treibmittels liegt dabei vorzugsweise im Bereich zwischen 1 bis 15 Gew.-%, insbesondere 1 bis 10 Gew.-%, die Menge an Wasser vorzugsweise im Bereich zwischen 0,5 bis 10 Gew.-%, insbesondere 1 bis 5 Gew.-%. Kohlendioxid wird von den physikalischen Treibmittel bevorzugt, welches bevorzugt in Kombination mit Wasser verwendet wird.

Zur Herstellung der erfindungsgemäßen Polyurethan-Blockweichschaumstoffe können üblicherweise auch Stabilisatoren sowie Hilfs- und/oder Zusatzstoffe eingesetzt werden.

Als Stabilisatoren kommen vor allem Polyethersiloxane, bevorzugt wasserlösliche Polyethersiloxane, in Frage. Diese Verbindungen sind im allgemeinen so aufgebaut, dass ein langkettiges Copolymerisat aus Ethylen- und Propylenoxid mit einem Polydimethylsiloxanrest verbunden ist. Weitere Schaumstabilisatoren sind in US-A-2,834,748, 2 917 480 sowie in US-A-3,629,308 beschrieben.

Die Umsetzung erfolgt gegebenenfalls in Anwesenheit von Hilfs- und/oder Zusatzstoffen wie Füllstoffen, Zellreglern, oberflächenaktiven Verbindungen und/oder Flammschutzmitteln. Bevorzugte Flammschutzmittel sind flüssige Flammschutzmittel auf Halogen-Phosphor-Basis wie Trichlorpropylphosphat, Trichlorethylphosphat und halogenfreie Flammschutzmittel wie Exolit® OP 560 (Clariant International Ltd).

Weitere Angaben zu den verwendeten Ausgangsstoffen, Katalysatoren sowie Hilfs- und Zusatzstoffen finden sich beispielsweise im Kunststoff-Handbuch, Band 7, Polyurethane, Carl-Hanser-Verlag München, 1. Auflage 1966, 2. Auflage, 1983 und 3. Auflage, 1993.

Zur Herstellung der erfindungsgemäßen Polyurethane werden die organischen Poly-isocyanate mit den Verbindungen mit mindestens zwei aktiven Wasserstoffatomen im Beisein der genannten Treibmittel, sowie gegebenenfalls der Katalysatoren und Hilfs- und/oder Zusatzstoffe zur Reaktion gebracht.

Bei der Herstellung der erfindungsgemäßen Polyurethane werden das Isocyanat und die Polyolkomponente zumeist in einer solchen Menge zusammengebracht, dass das Äquivalenzverhältnis von Isocyanatgruppen zur Summe der aktiven Wasserstoffatome 0,7 bis 1,25, vorzugsweise 0,8 bis 1,2 beträgt.

Die Schaumstoffe können durch das kontinuierliche Auftragen des Reaktionsgemisches auf Bandstraßen zur Erzeugung von Schaumblöcken hergestellt werden.

Blockweichschaumstoffe können in diskontinuierlichen oder kontinuierlichen Anlagen, wie beispielsweise nach dem Planiblock-, dem Maxfoam-, dem Draka-Petzetakis und dem Vertifoam-Verfahren verschäumt werden.

Die nach dem erfindungsgemäßen Verfahren hergestellten Polyurethan-Blockweichschaumstoffe zeichnen sich gegenüber ansonsten identischen Produkten, bei denen die erfindungsgemäß eingesetzten Polyetheralkohole aus nachwachsenden Rohstoffen mittels basischer Katalysatoren hergestellt wurden, durch einen deutlich verringerten Geruch, deutlich verringerte Werte für das Fogging sowie eine signifikant verringerte Rissbildung, sowie verbesserte Druckverformungsrest, vor und nach Alterung, aus. Weiterhin weisen die erfindungsgemäßen Blockweichschaumstoffe eine höhere Offenzelligkeit auf, was sich beispielsweise in einer erhöhten Luftdurchlässigkeit zeigt.

Die Erfindung soll an den nachfolgenden Beispielen näher erläutert werden.

Beispiele

Herstellung der Polyetheralkohole mit DMC-Katalyse

Die folgenden Kennwerte sind nach den genannten Normen, internen Prüfverfahren bzw. Messmethoden bestimmt worden:

| | |
|---|---|
| Wassergehalt in Gew.-%: | DIN 51777 |
| Hydroxylzahl in mgKOH/g | DIN 53240 |
| Säurezahl in mgKOH/g | DIN EN ISO 3682 |
| Viskosität (25°C): in mPa·s | DIN 51 550 |
| Farbzahl Pt/Co: | DIN ISO 6271 |
| Alkalität in ppm: | Titrimetrisch |
| $M_w$ in g/mol: | mittleres Gewichtsmittel des Molekulargewichtes bestimmt mittels Gelpermeation |
| Polydispersität $D = M_w/M_N$ | bestimmt mittels Gelpermeation |
| Geruch: | Prüfverfahren PPU 03/03-04 vom 15.02.2002 |

Bestimmung des Geruchs nach Prüfverfahren PPU 03/03-04 vom 15.01.2001

100 g des zu untersuchenden Polyetherols wird in eine neue trockene Glasflasche (250 ml) mit Schraubverschluss eingewogen. Die Bestimmung des Geruchs erfolgt bei 25°C. Vor dem Öffnen der Glasflasche wird diese kurz umgeschwenkt, Nach der sinnlichen Geruchsprüfung wird die Glasflasche wieder fest verschlossen. Die nächste Prüfung darf erst nach 15 min erfolgen. Insgesamt erfolgt die Beurteilung von 5 fest nominierten Prüfern. Die Beurteilung des Geruchs erfolgt in folgender Bewertung:'

| | |
|---|---|
| Note 1,0 | - kein Geruch |
| Note 1,3 | - leicht spürbarer Geruch |
| Note 1,5 | - spürbarer angenehmer Geruch |
| Note 1,7 | - angenehmer leicht stechender Geruch |
| Note 2,0 | - leicht unangenehmer Geruch |
| Note 3,0 | - unangenehmer Geruch |
| Note 4,0 | - riecht stark |
| Note 5,0 | - stinkt |

Nach der Geruchsbeurteilung der Prüfer wird der Geruchswert durch Mehrheitsentscheid ermittelt und dokumentiert. Kann kein Mehrheitsentscheid festgestellt werden, wird die Geruchsbewertung zu einem späteren Zeitpunkt wiederholt. Bei eingeschränkter sinnlicher Geruchsbewertung des Prüfers, wie Schnupfen, etc., wird die Prüfung durch einen anderen nominierten Prüfer durchgeführt.

Beispiel 1

8750 g Rizinusöl (Qualität DAB von der Fa. Alberdingk Boley, Hydroxylzahl 160 mg KOH/g) wurden in einem 20-Liter-Rührkesselreaktor mit 50 g einer 5,97%igen Suspension eines Zinkhexacyanocobaltats (entsprechend 150 ppm DMC-Katalysator, bezogen auf das herzustellende Produkt) versetzt und bei 120°C und einem Vakuum von ca. 40 mbar entwässert, bis der Wassergehalt unter 0,02 Gew.-% lag. Anschließend wurden 400 g Propylenoxid zudosiert und das Anspringen der Reaktion abgewartet, was an einer kurzzeitigen Temperaturerhöhung und einem schnellen Abfallen des Reaktordruckes erkennbar war. Nachfolgend wurden bei gleicher Temperatur 16450 g eines Gemisches aus 9250 g Propylenoxid und 2000 g Ethylenoxid in einem Zeitraum von 1,5 Stunden zudosiert. Nach Erreichen eines konstanten Reaktordruckes wurden nicht umgesetzte Monomere und andere flüchtige Bestandteile im Vakuum abdestilliert und das Produkt abgelassen. Das Polyetheralkohol wurde nicht über eine zusätzlich Desordorierungskolonne aufgearbeitet.

Der erhaltene, farblose Polyetheralkohol besaß folgende Kennwerte:

| | |
|---|---|
| Hydroxylzahl | 70,8 mg KOH/g |
| Säurezahl | 0,007 mg KOH/g |
| Wassergehalt | 0,017 Gew.-% |
| Viskosität (25°C) | 610 mPa·s |
| Farbzahl: | 72 mg Pt/l |
| $M_w$ | 2392 g/mol |

(fortgesetzt)

| | |
|---|---|
| Polydispersität D | 1,2208 |
| Geruch: | 1,9 |

Beispiel 2

Es wurde verfahren wie in Beispiel 1, allerdings wurden 6300 g Rizinusöl DAB mit 13840 g eines Gemisches aus 11870 g PO und 1970 g EO umgesetzt. Zusätzlich wurde der Polyetheralkohol über eine Desordorierungskolonne aufgearbeitet.

Der erhaltene, farblose Polyetheralkohol besaß folgende Kennwerte:

| | |
|---|---|
| Hydroxylzahl | 50,9 mg KOH/g |
| Säurezahl | 0,007 mg KOH/g |
| Wassergehalt | 0,012 % |
| Viskosität (25°C) | 718 mPa·s |
| Farbzahl | 85 mg Pt/l |
| $M_w$ | 3053 g/mol |
| Polydispersität D | 1,1625 |
| Geruch: | 1,5 |

Beispiel 3

Es wurde verfahren wie in Beispiel 1, allerdings wurden 11250 g Rizinusöl DAB mit 8750 g Propylenoxid umgesetzt. Zusätzlich wurde der Polyetheralkohol über eine Desordorierungskolonne aufgearbeitet.

Der erhaltene, farblose Polyetheralkohol besaß folgende Kennwerte:

| | |
|---|---|
| Hydroxylzahl | 91,0 mg KOH/g |
| Säurezahl | 0,007 mg KOH/g |
| Wassergehalt | 0,010 % |
| Viskosität (25°C) | 597 mPa·s |
| Farbzahl | 96 mg Pt/l |
| $M_w$ | 1865 g/mol |
| Polydispersität D | 1,1872 |
| Geruch: | 1,5 |

Beispiel 4 (Vergleichsbeispiel)

16 kg Rizinusöl DAB wurden in einem 50 Liter-Rührkesselreaktor mit 60 g festem Kaliumhydroxid versetzt und bei 110°C eine halbe Stunde gerührt. Nach Prüfung des Wasserwertes wurden 5,1 kg Propylenoxid so dosiert, dass der Reaktordruck einen Wert von 7 bar nicht überstieg. Anschließend wurde ein Gemisch aus 28,6 kg Propylenoxid und 5,5 kg Ethylenoxid wiederum so dosiert, dass der Druck 7 bar nicht überstieg.

Nach einer Nachreaktionsphase wurden flüchtige Bestandteile und nicht umgesetzte Alkylenoxide im Vakuum abdestilliert und der Reaktorinhalt mit 4 Gew.-% Wasser versetzt. Das alkalische Reaktionsgemisch wurde mit 80 mol-% der bezogen auf die Alkalitätsstöchiometrischen Menge an Phosphorsäure und 0,1 Gew.-% Ambosol neutralisiert und die gebildeten Salze über einen Tiefenfilter abfiltriert.

Zusätzlich wurde der Polyetheralkohol über eine Desordorierungskolonne aufgearbeitet.

Der erhaltene, farblose Polyetheralkohol besaß folgende Kennwerte:

| | |
|---|---|
| Hydroxylzahl | 51,8 mg KOH/g |
| Säurezahl | 0,738 mg KOH/g |
| Wassergehalt | 0,046 % |
| Viskosität (25°C) | 593 mPa·s |
| Farbzahl Pt/Co | 356 |
| Alkalität | 22 mg K/kg |

(fortgesetzt)

| | |
|---|---|
| $M_w$ | g/mol (wird nachgereicht) |
| Polydispersität D | (wird nachgereicht) |
| Geruch: | 1,7 |

Beispiel 5 (Vergleichsbeispiel)

Es wurde verfahren wie in Beispiel, 4, allerdings wurden 26,0 kg Rizinusöl mit 17,0 kg Ethylenoxid und 17,0 kg Propylenoxid umgesetzt.

Das Polyetherol wurde nicht über eine Desordorierungskolonne aufgearbeitet.

Der erhaltene, farblose Polyetheralkohol besaß folgende Kennwerte:

| | |
|---|---|
| Hydroxylzahl | 82,6 mg KOH/g |
| Säurezahl | 0,840 mg KOH/g |
| Wassergehalt | 0,023 % |
| Viskosität (25°C) | 535 mPa·s |
| Farbzahl Pt/Co | 346 |
| Alkalität | 64 mg K/kg |
| $M_w$ | g/mol (wird nachgereicht) |
| Polydispersität D | (wird nachgereicht) |
| Geruch: | 3,0 |

Herstellung der Polyurethan-Weichschaumstoffe Beispiele 6 bis 8 (Vergleichsbeispiele) und Beispiele 9 bis 10

Die in Tabelle 1 genannten Ausgangsprodukte wurden in den in Tabelle 1 aufgeführten Mengenverhältnissen zur Umsetzung gebracht.

Alle Komponenten außer dem Isocaynat Lupranat® T80A und Desmodur® T65 wurden zunächst durch intensives Mischen zu einer Polyolkomponente vereinigt. Danach wurde das Lupranat® T80 A und gegebenenfalls Desmodur® T65 unter Rühren hinzugegeben und die Reaktionsmischung in eine offene Form vergossen, worin sie zum Polyurethan-Schaumstoff ausschäumte. Die Kennwerte der erhaltenen Schäume sind in Tabelle 1 aufgeführt.

Die folgenden Kennwerte sind nach den genannten Normen, Arbeits- und Prüfanweisungen bestimmt worden:

| | |
|---|---|
| Raumgewicht in kg/m$^3$ | DIN EN ISO 845 |
| VOC Rizinusölsäurezyklus in ppm | PB VWL 709 |
| FOG Rizinusölsäurezyklus in ppm | PB VWL 709 |
| Luftdurchlässigkeit in dm$^3$/min | DIN EN ISO 7231 |
| Stauchhärte, 40 % Verformung in kPa | DIN EN ISO 2439 |
| Eindruckhärte, 25 % Verformung | DIN EN ISO 2439 |
| Eindruckhärte, 40 % Verformung | DIN EN ISO 2439 |
| Eindruckhärte, 65 % Verformung | DIN EN ISO 2439 |
| Dehnung in % nach | DIN EN ISO 1798 |
| Zugfestigkeit in kPa | DIN EN ISO 1798 |
| Rückprall-Elastizität in % | DIN EN ISO 8307 |
| Druckverformungsrest in % | DIN EN ISO 3386 |
| Wet-Compression-Set | Arbeitsanweisung |
| | AA U10-131-041 vom 06.02.02 |

Bestimmung erfolgte des Wet-Compression-Set nach der Arbeitsanweisung AA U10-131-041 vom 06.02.02:

Nach mittels Messschieber bzw. Messtaster wird die Höhe an einer vorher markierten Stelle der Schaum-Prüflinge der Maße 50 mm x 50 mm x 25 mm bestimmt. Anschließend werden die Prüflinge zwischen zwei Druckplatten gelegt und durch Abstandsstücke von 7,5 mm auf die Höhe mittels Einspannvorrichtung zusammengedrückt.

Die Lagerung im Klimaschrank bei 50°C und 95 % rel. Luftfeuchtigkeit beginnt unmittelbar nach dem Einspannen. Nach 22 h werden die Schaum-Prüflinge in kürzester Zeit aus der Einspannvorrichtung entfernt und auf einer Oberfläche mit geringer Wärmeleitung (Tablett) zum entspannen im Normklima 30 min zwischengelagert. Anschließend wird die Resthöhe an der markierten Stelle mit dem gleichen Messmittel bestimmt.

Der Wet-Compression-Set bezieht sich auf die Verformung und wird wie folgt berechnet:

$$\texttt{Wet-Compression-Set} = h_0 - h_R * 100/ (h_0 - 7,5 \text{ mm}) \text{ in } \%$$

$h_0$     Ursprungshöhe in mm
$h_R$     Resthöhe des Prüfkörpers in mm

Tabelle 1

| | OHZ | Bsp. 6 (V) | Bsp. 7 (V) | Bsp. 8 (V) | Bsp. 9 | Bsp.10 |
|---|---|---|---|---|---|---|
| Lupranol® 2080 | | | | | 50,00 | |
| Polyether, gemäß Beispiel 5 | 82,6 | 100,00 | | | | |
| Polyether, gemäß Beispiel 4 | 51,8 | | 100,00 | 100,00 | | |
| Polyether, gemäß Beispiel 3 | 91,0 | | | | 50,00 | |
| Polyether, gemäß Beispiel 1 | 70,8 | | | | | 100,00 |
| Tegoamin® B4900 | 0 | 1,40 | 0,80 | 0,80 | 1,20 | 1,20 |
| Niax® A1 | 560 | 0,05 | 0,05 | 0,05 | 0,05 | 0,05 |
| Dabco® 33LV | 425,8 | 0,15 | 0,15 | 0,15 | 0,20 | 0,20 |
| Kosmos® 29 | 0 | 0,23 | 0,20 | 0,23 | 0,23 | 0,30 |
| Wasser (zus.) | 6233 | 3,70 | 2,00 | 2,00 | 3,80 | 3,80 |
| Lupranat® T80A - Index | | | 110 | | 112 | 112 |
| Lupranat® T80A : Desmodur® T65 1:1-Index | 113 | | | 113 | | |
| Bemerkung | | | | gerissen | | |
| Startzeit in s | | 13 | 8 | 9 | 12 | 17 |
| Abbindezeit in s | | 75 | 105 | 100 | 90 | 90 |
| Steigzeit in s | | 85 | 120 | 120 | 95 | 100 |
| Luftdurchlässigkeit in dm3/min | | 69 | 48 | | 132 | 144 |
| **VOC** Rizinusölsäurezyklus in ppm | | **82** | **105** | | **0** | **0** |
| **FOG** Rizinusölsäurezyklus in ppm | | **3239** | **354** | | **0** | **0** |
| Raumgewicht in kg/m3 | | 25,3 | 43,7 | | 25,9 | 25,5 |
| Zugfestigkeit in kPa | | 71 | 55 | | 80 | 82 |
| Dehnung in % | | 76 | 139 | | 80 | 90 |
| Stauchhärte, 40 % Verformung in kPa | | 4,7 | 2,7 | | 4,5 | 4,1 |
| Druckverformungsrest in % | | 8,8 | 6,5 | | 3,1 | 3,0 |
| Wet-Compression-Set | | 25,3 | 23,2 | | 6,9 | 7,0 |
| Rückprall-Elastizität in % | | 26 | 45 | | 45 | 42 |
| Eindruckhärte, 25 % Verformung | | 172 | 73 | | 144 | 116 |
| Eindruckhärte, 40 % Verformung | | 249 | 108 | | 180 | 147 |
| Eindruckhärte, 65 % Verformung | | 513 | 248 | | 353 | 292 |

(fortgesetzt)

| Feuchtwärmelagerung<br>nach DIN EN ISO 2240 | | | | | |
|---|---|---|---|---|---|
| Stauchhärte, 40 % Verformung in kPa | 2,5 | 1,6 | | 3,1 | 3,0 |
| Zugfestigkeit in kPa | 65 | 35 | | 88 | 90 |
| Dehnung in % | 70 | 130 | | 140 | 143 |
| Druckverformungsrest in % | 18,3 | 12,4 | | 3,0 | 3,1 |

Erläuterungen zur Tabelle Lupranol® 2080 Polyetherol mit einer Hydroxylzahl von 48 mgKOH/g und einer Viskosität von 540 mPa·s (BASF Aktiengesellschaft) Dabco® 33 LV: 1,4-Diazabicyclo-[2,2,2]-octan (33 %) in Dipropylenglykol (67 %) (Air Products and Chemicals, Inc.)

Niax® A1: Bis-(2-Dimethylaminoethyl)ether (70 %) in Dipropylenglykol (30 %) (Crompton Corporation) Kosmos® 29: Zinn-II-Salz der Ethylhexansäure (Degussa AG) Tegostab® B 4900 : Silikonstabilisator (Degussa AG) Lupranat® T80: 2,4-/2,6-Toluylendiisocyanatgemisch im Verhältnis 80:20 (BASF Aktiengesellschaft) Desmodur® T65: 2,4-/2,6-Toluylendiisocyanatgemisch im Verhältnis 65:35 (BAYER AG)

**Patentansprüche**

1. Verfahren zur Herstellung von emissionsarmen Polyurethan-Blockweichschaumstoffen mit einem Druckverformungsrest von maximal nach Alterung, gemäß DIN EN ISO 2440, maximal 10 % durch Umsetzung von

   a) Polyisocyanaten mit
   b) Verbindungen mit mindestens zwei mit Isocyanatgruppen reaktiven Wasserstoffatomen,

   **dadurch gekennzeichnet, dass** als Verbindungen b) Polyetheralkohole, die durch Anlagerung von Alkylenoxiden an Rizinusöl unter Verwendung von DMC-Katalysatoren hergestellt wurden, eingesetzt werden.

2. Emissionsarmen Polyurethan-Blockweichschaumstoffe, herstellbar nach Anspruch 1.

3. Verwendung Polyurethan-Blockweichschaumstoffen nach Anspruch 2 in Kraftfahrzeuginnenräumen.

4. Verwendung Polyurethan-Blockweichschaumstoffen nach Anspruch 2 in Möbeln und Matratzen.


**Claims**

1. A process for producing low-emission flexible polyurethane slabstock foams having a compressive set after aging in accordance with DIN EN ISO 2440 of not more than 10% by reacting

   a) polyisocyanates with
   b) compounds having at least two hydrogen atoms which are reactive toward isocyanate groups,

   wherein polyether alcohols which have been prepared by addition of alkylene oxides onto castor oil using DMC catalysts are used as compounds b).

2. A low-emission flexible polyurethane slabstock foam which can be produced according to claim 1.

3. The use of the flexible polyurethane slabstock foam according to claim 2 in motor vehicle interiors.

**4.** The use of the flexible polyurethane slabstock foam according to claim 2 in furniture and mattresses.

**Revendications**

**1.** Procédé de préparation de mousses souples en bloc de polyuréthanne à émission faible ayant une déformation permanente au maximum après vieillissement, conformément à la norme DIN EN ISO 2440, au maximum de 10 %, par réaction

       a) de polyisocyanates avec
       b) des composés comportant au moins deux atomes d'hydrogène réactifs vis-à-vis des groupes isocyanate,

**caractérisé en ce que**, comme composés b), on utilise des alcools de polyéther, qui ont été préparés par fixation d'oxydes d'alkylène sur de l'huile de ricin, par utilisation de catalyseurs DMC.

**2.** Mousses souples en bloc de polyuréthanne à émission faible, que l'on peut préparer suivant la revendication 1.

**3.** Utilisation de mousses souples en bloc de polyuréthanne suivant la revendication 2 dans des volumes internes de véhicule automobile.

**4.** Utilisation de mousses souples en bloc de polyuréthanne suivant la revendication 2 dans des meubles et des matelas.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0044813 A
- EP 654302 A
- EP 862947 A
- WO 9916775 A
- WO 0074845 A
- WO 0074843 A
- WO 0074844 A
- DE 19960148 A1
- WO 9852689 A
- DD 203734735
- US 2834748 A
- US 2917480 A
- US 3629308 A